# EUROPÄISCHE PATENTSCHRIFT

(11) **EP 2 289 822 B1**
(45) Veröffentlichungstag und Bekanntmachung des Hinweises auf die Patenterteilung: **29.05.2013**
(21) Anmeldenummer: 10405148.7
(22) Anmeldetag: 03.08.2010
(51) Int. Cl.: B65G 7/04, B65G 39/09, B65G 39/20, F16C 29/06, F16C 33/37

(54) **Stützvorrichtung zum Fördern schwerer Lasten**
Support device for conveying heavy loads
Dispositif de support pour convoyer des charges lourdes

(30) Priorität: 24.08.2009 CH 13072009
(43) Veröffentlichungstag der Anmeldung: 02.03.2011
(73) Patentinhaber: WRH Walter Reist Holding AG, 8272 Ermatingen (CH)
(72) Erfinder: Ruge, Martin, 4656 Starrkirch-Wil (CH)
(74) Vertreter: Frei Patent Attorneys

(56) Entgegenhaltungen:
- DE-A1- 19 500 050
- FR-A1- 2 504 998
- GB-A- 1 338 218
- GB-A- 2 201 199
- JP-U- 51 130 580
- US-A1- 2008 145 197

## Beschreibung

Die Erfindung bezieht sich auf das Gebiet der Fördertechnik, und insbesondere auf eine Stützvorrichtung zum Fördern schwerer Lasten gemäss dem Oberbegriff des Patentanspruches 1 und eine Fördereinrichtung mit zwei oder mehr solchen Stützvorrichtungen.

### STAND DER TECHNIK

Zum horizontalen Fördern schwerer Lasten in Materialflussystemen sind beispielsweise Rollenförderer bekannt, bei welchen die Lasten auf einer Folge von einzeln gelagerten, stationären Rollen abrollen. Die Lager der Rollen und die Rollen selber stützen das Gewicht der Last und müssen, entsprechend dem Gewicht der zu fördernden Lasten, robust ausgeführt werden.

DE 20 2007 011 352 zeigt eine Ausziehführung für Schubladen mit Schienen und zwischen den Schienen angeordneten zylindrischen Wälzkörpern, welche um einen Stützkörper laufen und dabei am Stützkörper abrollen. Zwischen den Wälzkörpern können Stifte angeordnet sein, welche die Wälzkörper voneinander beabstanden. Die Stifte sind in seitlichen Nuten geführt. Ein elastisches Band verläuft in Nuten der Wälzkörper um die Gesamtheit der Wälzkörper herum und hält sie dadurch zusammen.

GB 2 201 199 offenbart zylindrische Wälzkörper, welche um einen Stützkörper laufen und dabei am Stützkörper abrollen, wobei die Wälzkörper von einem Band umschlossen sind.

JP 51 130580 U beschreibt eine Lagervorrichtung mit Wälzkörpern, wobei zwischen ersten Wälzkörpern, welche eine Lastkraft aufnehmen, weitere Wälzkörper vorliegen, welche die ersten Wälzkörper voneinander beabstanden.

US 2008/145197 A1 beschreibt ein Gestell mit Rollenelementen mit feststehenden Rollen, von denen mehrere schräg montiert einerseits nebeneinander und andererseits übereinander angeordnet sind.

FR 2 504 998 A1 zeigt eine gattungsgemäß Stützvorrichtung und einen Rollenkörper, in welchem jeweils zwischen zwei Rollen ein Paar von Nadeln als weitere Wälzkörper eingelegt ist. Diese sind nur in seitlichen Nuten gelagert und können herausfallen, wenn sich Abstände zwischen den Rollen ergeben. In gerade verlaufenden Abschnitten einer Umlaufbahn der Wälzkörpern ist ein aussenliegender Satz von Nadeln zur Beabstandung der Wälzkörper wirksam. Dabei rollen diese äusseren Nadeln jeweils sowohl an aufeinanderfolgenden Wälzkörper als auch an einer äusseren Begrenzung der Umlaufbahn. In gekrümmt verlaufenden Abschnitten der Umlaufbahn ist ein innenliegender Satz von Nadeln zur Beabstandung der Wälzkörper wirksam. Dabei rollen diese inneren Nadeln jeweils sowohl an aufeinanderfolgenden Wälzkörpern als auch an einer innern Begrenzung der Umlaufbahn ab. In den gerade verlaufenden Abschnitten wirken die inneren Nadeln nicht zur Beabstandung der Wälzkörper, und werden durch die Wälzkörper entlang der inneren Begrenzung der Umlaufbahn geschoben. Dabei können die inneren Nadeln zwischen dieser Begrenzung und den Wälzkörpern eingeklemmt werden, Auch führt eine gegenläufige Bewegung von Wälzkörpern und Umlaufbahn (bezüglich der innern Nadeln) zu Reibung und somit auch zu Verschleiss an den inneren Nadeln. Durch abgenutzte und unrunde innere Nadeln wird die Gefahr des Verklemmens stark erhöht.

### DARSTELLUNG DER ERFINDUNG

Es ist Aufgabe der Erfindung, eine Stützvorrichtung zum Fördern schwerer Lasten der eingangs genannten Art zu schaffen, welche eine robuste und kostengünstige Konstruktion aufweist.

Diese Aufgabe löst eine Stützvorrichtung mit den Merkmalen des Patentanspruchs 1.

Die Erfindung betrifft auch eine Fördereinrichtung mit den Merkmalen des Anspruchs 14.

Die Stützvorrichtung zum Fördern schwerer Lasten weist einen Stützkörper und einen um den Stützkörper umlaufenden Rollenkörper auf, wobei
■ der Rollenkörper eine Folge von Stützrollen und von Distanzierungsrollen aufweist,
■ die Distanzierungsrollen einen kleineren Durchmesser als die Stützrollen aufweisen und die Distanzierungsrollen jeweils aufeinanderfolgende Stützrollen voneinander beabstanden, und
■ die Stützvorrichtung zum Stützen einer entlang eines Stützbereiches beweglichen Last vorgesehen sein kann, und der Rollenkörper zumindest im Stützbereich in seiner ganzen Breite von einem Band bedeckt ist, und somit im Stützbereich die Stützrollen am Stützkörper und am Band abrollen.

Das Band deckt oder umschlingt also die Rollenkörper zumindest teilweise, zumindest im Stützbereich. Dadurch sind die Stützrollen vor Verunreinigung geschützt. Die Verteilung der Last auf eine Mehrzahl von Stützrollen erlaubt eine Konstruktion mit leichten, günstigen Materialien. Vorzugsweise sind daher die Stützrollen und/oder die Distanzierungsrollen aus Kunststoff hergestellt. Es ist ein sehr leichtes Rollen und Fördern mit kleinen Reibungsverlusten möglich. Der Rollenkörper umfasst die Gesamtheit der Stützrollen und Distanzierungsrollen, sowie von allfälligen Lagerungs- oder Stützelementen, welche mit diesen Rollen mitlaufen. Das Band kann aus einem flexiblen Material hergestellt sein, oder kann ein Band aus einer Vielzahl von verketteten Einzelelementen sein, beispielsweise eine Mattenkette, ein Gliederkettenband, Plattenkettenband, etc.

In einer bevorzugten Ausführungsform der Erfindung weist der Stützkörper zwei umlaufende Führungsnuten auf und sind die Stützrollen mittels Achszapfen in den Führungsnuten geführt. Vorzugsweise sind auch die Distanzierungsrollen mittels Achszapfen in den Führungsnuten geführt. Die Achszapfen können einstückig an den jeweiligen Rollen ausgebildet sein, oder als Teil von durchgehenden Rollenachsen, welche in die Rollen eingesetzt sind.

Wenn die Belastung durch Schubkräfte nicht zu gross ist, ist keine weitere Lagerung der Achsen notwendig, da die Belastung zum Abstützen der Last durch die Stützrollen direkt an den Stützkörper übertragen wird. Ist auch eine Schubkraft innerhalb des Rollenkörpers, also zwischen den Stützrollen, zu übertragen, dann sind vorzugsweise die Stützrollen und/oder die Distanzierungsrollen mittels Rollenlagern (Wälzlagern) oder Gleitlagern, zusammenfassend als Lager bezeichnet, gelagert. Vorzugsweise sind dabei die Achszapfen der Stützrollen respektive die Achszapfen der Distanzierungsrollen am Innenteil eines Lagers befestigt, dessen Aussenteil in der jeweiligen Führungsnut abrollt. In einer anderen Ausführungsform der Erfindung sind die Lager innerhalb der Stützrollen und/oder Distanzierungsrollen angeordnet, und ist die Rollenachse dadurch drehbar bezüglich der jeweiligen Rolle. In einer bevorzugten Ausführungsform der Erfindung sind nur die Distanzierungsrollen mit Lagern, insbesondere Wälzlagen versehen.

Es sind also die Distanzierungsrollen jeweils zwischen den Stützrollen angeordnet. Zwei Distanzierungsrollen sind zwischen zwei benachbarten Stützrollen angeordnet. In diesem Fall rollt im Stützbereich zwischen zwei Stützrollen jeweils eine äussere Distanzierungsrolle mit ihrer Rotationsachse ausserhalb einer Ebene, welche durch die Rotationsachsen der beiden Stützrollen definiert ist, und eine innere Distanzierungsrolle innerhalb dieser Ebene (wobei die Begriffe "ausserhalb" und "innerhalb" in Bezug auf den Stützkörper zu verstehen sind). Über den ganzen Rollenkörper gesehen bedeutet dies, dass die Achsen der Stützrollen eine Referenzfläche, in welcher sie sich bewegen, definieren, und die Achsen einer äusseren Gruppe von Distanzierungsrollen, ausserhalb der Referenzfläche verlaufen, und die Achsen einer inneren Gruppe von Distanzierungsrollen innerhalb der Referenzfläche verlaufen.

Vorzugsweise sind jeweils zwei Distanzierungsrollen an einer Stützrolle beweglich befestigt und bilden gemeinsam eine Rolleneinheit. Insbesondere ist dazu an einer Stützrolle jeweils mindestens ein Lagerelement angeordnet. Die Stützrolle sowie die beiden Distanzierungsrollen sind drehbar im Lagerelement gelagert, wobei die beiden Distanzierungsrollen an der Stützrolle abrollen. Die Lagerung der Stützrolle am Lagerelement kann lose sein, da sie lediglich verhindern soll, dass der Lagerkörper umfällt, wenn die Rollen auseinandergezogen werden. Beispielsweise kann die Lagerung mittels einer Schnappverbindung zwischen Lagerelement und Rollenachse geschehen.

In einer weiteren bevorzugten Ausführungsform der Erfindung liegt ein mitbewegtes Lagerelement vor, jedoch sind nur die beiden Distanzierungsrollen in diesem drehbar gelagert, die Stützrollen jedoch nicht. Vorzugsweise ist die Form des Lagerelementes so ausgestaltet, dass das Lagerelement auch bei auseinandergezogenen Rollen im Zwischenraum zwischen Band und Stützfläche nicht umkippt. Die Distanzierungsrollen bilden zusammen mit dem mindestens einen Lagerelement ein Distanzierungselement.

Das Paar von Distanzierungsrollen, sei es nun mit einer Stützrolle verbunden oder nicht, zentriert sich automatisch (bezüglich der Referenzfläche), wenn die

Distanzierungsrollen mit der nächsten Stützrolle in Kontakt kommen. Bei einer Schub-Belastung, also in Richtung der Bewegungsrichtung oder Umlaufrichtung der Stützrollen um den Stützkörper, werden somit die Rolleneinheiten gegeneinander gedrückt und stabilisiert - eine einzelne, mittige Distanzierungsrolle würde dabei nach oben oder nach unten gedrückt. Mit dieser paarweisen Anordnung von Distanzierungsrollen ist also eine bessere Übertragung von Schubkräften möglich. Dies ist beispielsweise dann relevant, wenn zwei geförderte Gegenstände mit der Stützvorrichtung in Kontakt sind, und nur einer derselben mit irgendwelchen zusätzlichen Antriebsmitteln oder von Hand vorwärts gestossen wird. Dann vermag die Stützvorrichtung, diese Antriebskraft an den anderen Gegenstand zu übertragen, so dass dieser indirekt angetrieben und mitbewegt wird. Diese Wirkungsweise ist unabhängig von der Umlaufrichtung (Uhrzeigersinn oder Gegenuhrzeigersinn) der Rollen.

Das Lagerelement nimmt Kräfte auf, welche aufgrund der gegeneinander gedrückten Stützrollen entstehen und die Distanzierungsrollen auseinander drücken würden. Diese Kräfte können wiederum zu Reibungsverlusten in den Lagern der Distanzierungsrollen im Lagerelement führen. Deshalb sind in weiteren bevorzugten Ausführungsformen der Erfindung die Distanzierungsrollen mittels Rollenlagern im mindestens einen Lagerelement gelagert, oder es sind die zwei Distanzierungsrollen mit einem Band umschlungen. Das Band, beispielsweise aus dünnem Stahl, kann um die ganzen Rollen oder um dünnere Abschnitte der Rollen oder der Rollenachsen geschlungen sein. Das Band nimmt die Kraft auf, welche die Distanzierungsrollen auseinander treibt und bestimmt einen maximalen Abstand der Distanzierungsrollen. Eine oder beide der Distanzierungsrollen können dabei in einem Langloch gelagert sein, was eine gewisse Variation des Abstandes der beiden Distanzierungsrollen erlaubt.

In anderen bevorzugten Ausführungsformen der Erfindung weist eine Stützvorrichtung einen Antrieb auf. Dieser greift beispielsweise am Band oder am Rollenkörper an. Dabei müssen, je nach Grösse der geförderten Gegenstände, nicht alle von mehreren seriellen Stützvorrichtungen einen Antrieb aufweisen.

Da die Rolleneinheiten vorzugsweise nicht miteinander verbunden sind, können sie auseinander gezogen werden, oder sich in Bereichen, in welchen sie nicht belastet sind, während des Umlaufens voneinander entfernen. Wenn sie sich wieder einander annähern, sollen die Distanzierungsrollen wieder korrekt an der nächsten Stützrolle anliegen. Dies geschieht dann, wenn die folgende Bedingung erfüllt ist: Liegt die Rolleneinheit mit der Stützrolle und einer unteren Distanzierungsrolle auf der Stützfläche (allgemeiner gesagt: auf einer Ebene, welche eine Tangente an die beiden Rollen bildet), und legt man eine Parallelebene parallel zur Stützfläche durch die Rotationsachse der Stützrolle, dann muss die Rotationsachse der oberen Distanzierungsrolle oberhalb der Parallelebene liegen. Mit anderen Worten: Die Bedingung ist erfüllt, wenn eine Ebene, welche durch die Rotationsachse der Stützrolle und parallel zu einer von aussen an die Rolleneinheit angelegten Tangente an die Stützrolle und eine der Distanzierungsrollen verläuft, zwischen den Rotationsachsen der beiden Distanzierungsrollen hindurch verläuft. Ist dies der Fall, dann wird die zweite Distanzierungsrolle angehoben, wenn sie an eine weitere, ebenfalls auf der Stützfläche abrollende Stützrolle stösst. Beim Auseinanderziehen zweier Rolleneinheiten kippen somit die Distanzierungsrollen gegen die Stützfläche, beim Zusammenstossen der Rolleneinheiten die Distanzierungsrolle werden sie wieder aufgerichtet. Die Rolleneinheit ist dann wieder bezüglich der Referenzfläche zentriert.

In einer anderen bevorzugten Ausführungsform der Erfindung liegen keine Rolleneinheiten vor, sondern weist der Stützkörper zur Führung der Distanzierungsrollen weitere Führungsnuten auf, die von den Führungsnuten für die Stützrollen verschieden sind. Die Achszapfen der Distanzierungsrollen sind in dieser mindestens einen weiteren Führungsnut gelagert. Die weiteren Führungsnuten verlaufen dabei parallel zur Führungsnut, innerhalb und/oder ausserhalb der Führungsnut.

In weiteren Ausführungsformen der Erfindung ragt eine Schulter eines Lagerelementes oder eines Lagers in radialer Richtung in den umhüllenden Zylinder jeweils der benachbarten Stützrollen hinein und begrenzt dadurch eine Bewegung der Stützrolle entlang der Richtung ihrer Rollenachse. Die Schultern beidseits der Stützrolle umfassen und führen also die Stützrollen in axialer Richtung. In einer bevorzugten Ausführungsform der Erfindung weisen die Stützrollen zur Führung keine weiteren vorstehenden Lagerelemente wie Rollenachse oder Achszapfen auf, sondern sind lediglich durch die Schultern der Lagerelemente oder Lager der Distanzierungsrollen geführt und ausgerichtet.

Eine **Fördereinrichtung** weist zwei oder mehr Stützvorrichtungen auf, welche in Serie hintereinander angeordnet sind. Zwischen den Stützvorrichtungen ist jeweils ein Zwischenelement mit mindestens einem beweglichen Stützelement angeordnet. Dabei stützt das Stützelement die geförderten Gegenstände im Übergangsbereich zwischen zwei Stützvorrichtungen. Das Stützelement besteht beispielsweise aus einer oder zwei oder mehr Zwischenrollen, d.h. Rollen konventioneller Art. Die Stützvorrichtungen und Zwischenelemente bilden vorzugsweise ein modulares Baukastensystem, mit welchem Stützvorrichtungen und Zwischenelemente in beliebiger Anzahl zum Bilden einer Fördereinrichtung aneinander reihbar sind. In einer weiteren Ausführungsform der Erfindung sind die Zwischenelemente in den Stützvorrichtungen, und sind die Stützvorrichtungen mit den integrierten Zwischenelementen aneinander reihbar, vorzugsweise formschlüssig.

Vorzugsweise sind dabei die Stützvorrichtungen und die Zwischenelemente in Förderrichtung formschlüssig aneinander reihbar. Sie sind also derart geformt, dass eine Aussenkontur einer Stützvorrichtung, an ihren Stirnflächen, komplementär zur Aussenkontur der Zwischenelemente geformt ist. Vorzugsweise weisen die Stützvorrichtungen und Zwischenelemente zudem auch korrespondierend geformte Verbindungselemente auf. Diese erlauben beispielsweise ein Zusammenstecken oder ein Aneinanderflanschen der Stützvorrichtungen und Zwischenelemente.

In der Fördereinrichtung sind in einer weitere bevorzugten Ausführungsform zudem mehrere Reihen mit jeweils mehreren Stützvorrichtungen und Zwischenelementen parallel zueinander angeordnet. Damit lassen sich breitere Lasten stützen und fördern. Dazu können die Reihen von Stützvorrichtungen in Richtung normal zur Förderrichtung voneinander beabstandet sein, oder auch miteinander verbunden sein, insbesondere formschlüssig. Dabei sind beispielsweise jeweils die Stützvorrichtungen nebeneinanderliegender Reihen in Längsrichtung gegeneinander versetzt. Dabei kann, je nach Art des Fördergutes, auf den Einsatz von Zwischenelementen verzichtet werden.

Grundsätzlich lässt sich eine Stützvorrichtung auch ohne Band realisieren. Dies hat jedoch den Nachteil, dass im Betrieb als Schwerlastförderer mit der Zeit eine Verschmutzung der Vorrichtung zu erwarten ist.

Die Vorrichtung kann fest im Bodenbereich einer Anlage montiert sein so dass als Fördergut Stückgut, Paletten, Montageträger, Maschineneinheiten, Materialträger für Fliessbandstationen und dergleichen damit transportiert werden können. Die Vorrichtung kann auch leicht geneigt angeordnet werden, so dass das Fördergut, durch die Schwerkraft getrieben oder mit wenig Kraft von Hand gefördert werden kann. Die geneigte Fördereinrichtung kann zur Unterstützung in einem Materialpuffer verwendet werden, in welchem Stückgut oder Träger zu einer Verarbeitungsstation geführt werden, und beim Entfernen jeweils nachfolgendes Stückgut oder Träger durch die Schwerkraft nachgefördert werden. Vorzugsweise ist die Fördereinrichtung zumindest abschnittsweise mit einem Winkel zwischen 3° und 20°, vorzugsweise in einem Winkel um 10°, zur Horizontalen geneigt. Grundsätzlich ist es auch möglich, eine oder mehrere Stützvorrichtungen anstelle von Rädern an einem Träger zu befestigen, so dass der Träger am Boden abrollt.

In einer bevorzugten Ausführungsform der Erfindung liegt im Stützbereich mindestens eine Vertiefung der Stützfläche vor, wobei eine Rolle, welche sich im Bereich der Vertiefung befindet, in die Vertiefung hinein bewegbar ist.

Gemäss einem Verfahren zum Betrieb einer Fördereinrichtung werden beim Abrollen der Rollen im Stützbereich einer Stützvorrichtung einer Fördervorrichtung die folgenden Schritte ausgeführt:
■ Entlasten der Rollen beim Eintreten in einen Teilbereich des Stützbereiches, beispielsweise der genannten Vertiefung;
■ Ausrichten der entlasteten Rollen;
■ erneutes Belasten der Rollen beim Verlassen des Teilbereiches des Stützbereiches.

Dadurch sind Lastkräfte, welche auf die Rollen wirken, im Bereich der Vertiefung reduziert. Vorzugsweise wirkt dort gar keine Lastkraft auf die Rollen. Die Rollen verlieren also jeweils im Bereich der mindestens einen Vertiefung im Wesentlichen den Kontakt zu den geförderten Gegenständen, beispielsweise einem Fördermittel. Dadurch sind die Rollen entlastet, so dass sich die Achsrichtung (der Drehachse) der Rollen leichter korrigieren lässt. Dadurch kann sich eine Rolle, falls sie verkantet war, das heisst, wenn die Richtung ihrer Drehachse nicht senkrecht zu ihrer Abrollrichtung respektive zur Förderrichtung war, wieder senkrecht zur Förderrichtung ausrichten. Die Drehachse der Rollen ist beispielsweise definiert, indem die Rollen zylindrisch oder tonnenförmig geformt sind. Der Begriff "Abrollrichtung" bezeichnet hier und im Folgenden die translatorische Bewegungskomponente des Schwerpunkts einer abrollenden Rolle

Dies hat den Vorteil, dass Rollen, welche sich - je nach Belastung und je nach Nichtidealitäten in der Form der Rollen, der Lagerung der Rollen und der Stützflächen - nach einer gewissen Strecke unter Last verkanten, wieder ausgerichtet werden. Damit wird verhindert, dass die verkanteten Rollen mit ihren Achsen und/oder ihren Umfangsflächen und/oder mit ihren Stirnflächen an ihren Führungen schleifen und einen übermässigen Abrieb bewirken. Dadurch wiederum wird es möglich, Rollen und Führungen aus kostengünstigen und leichten Materialien herzustellen.

Die Richtung, in welcher die Last auf die Stützvorrichtung und damit, via die Rollen, auf die Stützfläche wirkt, ist in der Regel die Richtung der Schwerkraft. Im Folgenden werden, der Einfachheit der Beschreibung halber, die Erklärungen vor allem in diesem Sinne vorgenommen. Die Erfindung ist aber natürlich auch bei anderen Richtungen der Belastung sinngemäss einsetzbar.

Das Ausrichten der Rollenachsen kann durch einen der folgenden **Effekte**, oder durch eine Kombination dieser Effekte geschehen:
- Beim Hineinrollen oder Hineingleiten der Rolle in die Vertiefung wird die Rolle entlastet und richtet sich parallel zur Vertiefung aus. Das Hineinbewegen in die Vertiefung kann dabei durch die Schwerkraft und/oder durch eine Führung der Rollen verursacht sein.
- Beim wieder Hochfahren aus der Vertiefung heraus wird die Rolle gegen die aufwärts verlaufende Stützfläche geschoben oder gezogen und wird dadurch parallel zur Vertiefung ausgerichtet.
- Mittels seitlicher Bahnverengungen, welche an den Stirnseiten der Rolle angreifen und die Rollen seitlich in eine vorgegebene Lage (vorzugsweise in der Mitte der Rollenbahn) drängen und dabei auch die Achsrichtung der Rollen ausrichten. Vorzugsweise sind dabei die Stirnseiten der Rollen parallel zu Flächen der Bahnverengungen.

In einem Querschnitt durch die Vertiefung, in einer Schnittebene senkrecht zur Förderrichtung oder Abrollrichtung der Rollen, korrespondiert die Form der Vertiefung vorzugsweise im wesentlichen mit der Umfangskontur einer Rolle (in einem Längsschnitt entlang der Drehachse der Rolle gesehen). In einer bevorzugten Ausführungsform der Erfindung ist die Vertiefung im Bereich der Enden der Rolle, also in Bereichen beiderseits der Mittellinie der Rollenbahn, etwas stärker ausgeprägt, d.h. etwas tiefer als in der Mitte. Dadurch wird es leichter, die Achsrichtung der Rollen zu drehen.

Weitere bevorzugte Ausführungsformen gehen aus den abhängigen Patentansprüchen hervor.

### KURZE BESCHREIBUNG DER ZEICHNUNGEN

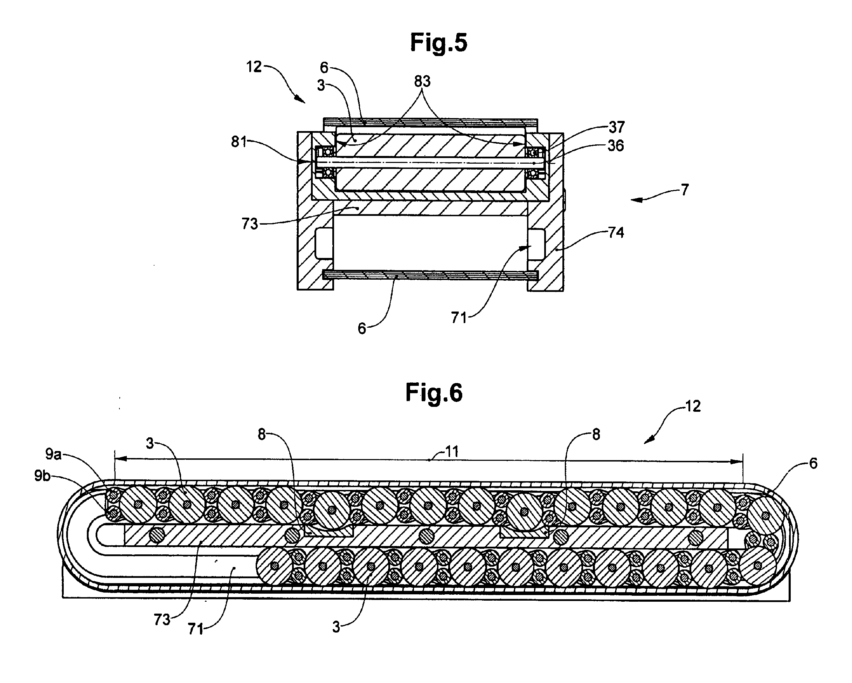

Im folgenden wird der Erfindungsgegenstand anhand von bevorzugten Ausführungsbeispielen, welche in den beiliegenden Zeichnungen dargestellt sind, näher erläutert. Es zeigen jeweils schematisch die Figuren 6-13 Ausführungsformen der Erfindung. Die übrigen Figuren dienen zum Vertändnis der Erfindung.
- Figuren 1a-1d: eine Ansicht einer Stützvorrichtung und drei Schnitte durch diese Stützvorrichtung;
- Figuren 2a-2c: eine Ansicht einer Stützvorrichtung und zwei Schnitte durch eine weitere Ausführungsform einer Stützvorrichtung;
- Figur 3: eine Anwendung einer Fördereinrichtung, bestehend aus mehren Stützvorrichtungen;
- Figuren 4a-4b: ein Zwischenelement;
- Figur 5: einen Schnitt durch eine Stützvorrichtung mit Rollenlagern;
- Figur 6: einen Querschnitt durch eine Stützvorrichtung in einer Ausführungsform der Erfindung;
- Figur 7: eine Rolleneinheit;
- Figur 8: zwei hintereinander angeordnete Rolleneinheiten in einer Aufsicht;
- Figuren 9-12: Rolleneinheiten mit einem Halteband zur Entlastung der Achsen der Distanzierungsrollen; und
- Figuren 13-16: Lagerelemente und Distanzierungsrollen, welche nicht an Stützrollen befestigt sind.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

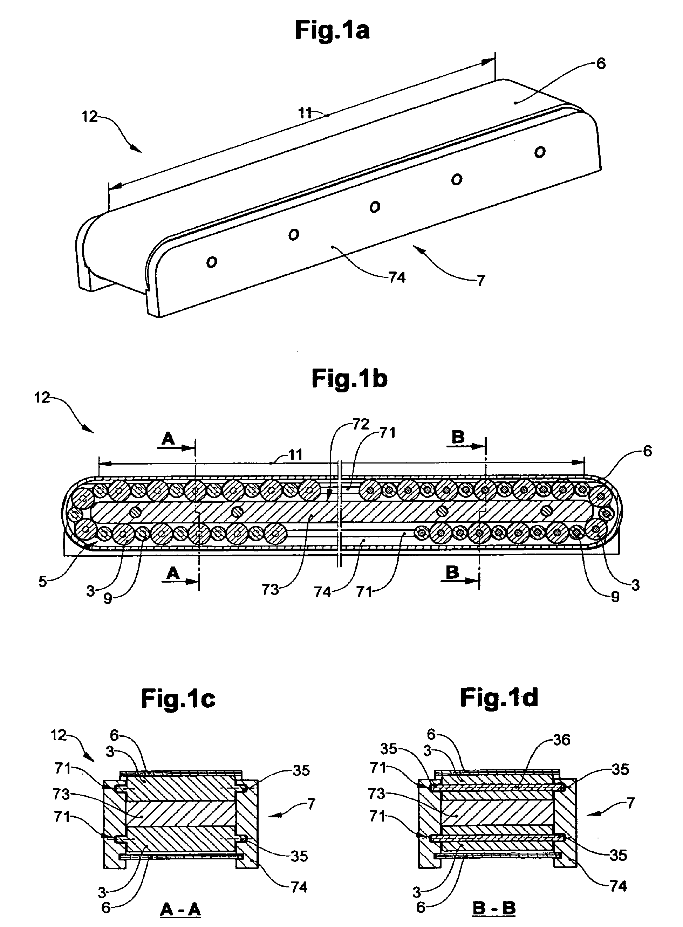

**Figuren 1a-1d** zeigen eine Ansicht einer Stützvorrichtung 12 und drei Schnitte durch diese Stützvorrichtung 12. Die Stützvorrichtung 12 weist einen Stützkörper 7 mit Seitenelementen 74 auf, sowie einen im Stützkörper 7 umlaufenden Rollenkörper 5, der von einem Band 6 umschlungen ist. Es sind nicht alle Rollen 3 entlang der Umlaufbahn um den Zentralkörper 73 gezeichnet; in Wirklichkeit liegen also Rollen 3 im Wesentlichen entlang der ganzen Umlaufbahn vor. Im gezeigten Beispiel ist der Rollenkörper 5 entlang seines gesamten Umfangs vom Band 6 umschlungen, er kann aber auch nur abschnittsweise umschlungen oder bedeckt sein. Das Band 6 bedeckt nach oben hin, entlang eines Stützbereiches 11, vorzugsweise die ganze Breite des Rollenkörpers 5, so dass dieser vor Verschmutzung geschützt ist. Wie im Längsschnitt **Figur 1b** und in den Querschnitten in **Figur 1c, 1d** sichtbar, weist der Rollenkörper 5 abwechslungsweise grosse und kleine Rollen auf, wobei die grossen Rollen als Stützrollen 3 dienen, welche eine Lastkraft von geförderten und gestützten Gegenständen (nicht gezeichnet), die auf das Band 6 und die Stützrollen 3 wirken, an einen Zentralkörper 73 des Stützkörpers 7 übertragen. Der Zentralkörper 73 wiederum ist durch die Seitenelemente 74 auf dem Boden oder in einer Anlage abgestützt. Die Stützrollen 3 sind durch die kleineren Rollen, im Folgenden Distanzierungsrollen 9 genannt, voneinander beabstandet. Die Stützrollen 3 und die Distanzierungsrollen 9 rollen aneinander ab und sind in Führungsnuten 71, welche in den Seitenelementen 74 ausgebildet sind und entlang der Umlaufbahn der Rollen um den Zentralkörper 73 verlaufen, geführt. Diese Führung geschieht mittels axial hervorstehender Achszapfen 35 der Stützrollen 3 und Achszapfen 95 der Distanzierungsrollen 9, welche in die Führungsnuten 71 hineinragen und so verhindern, dass die Rollen 3, 9 die Umlaufbahn verlassen. Die Achszapfen 35, 95 sind einstückig an den Rollen 3, 9 ausgebildet (**Figur 1c****),** oder als durchgehende Rollenachsen 36 in die Rollen 3, 9 eingesetzt (**Figur 1d****).** Im oberen Bereich oder Stützbereich 11 der Stützvorrichtung 12 liegt das Band 6 auf den Stützrollen 3 auf, um unteren Bereich oder Rücktrum kann es etwas vom Rollenkörper 5 entfernt sein (**Figuren 1b-1d****).**

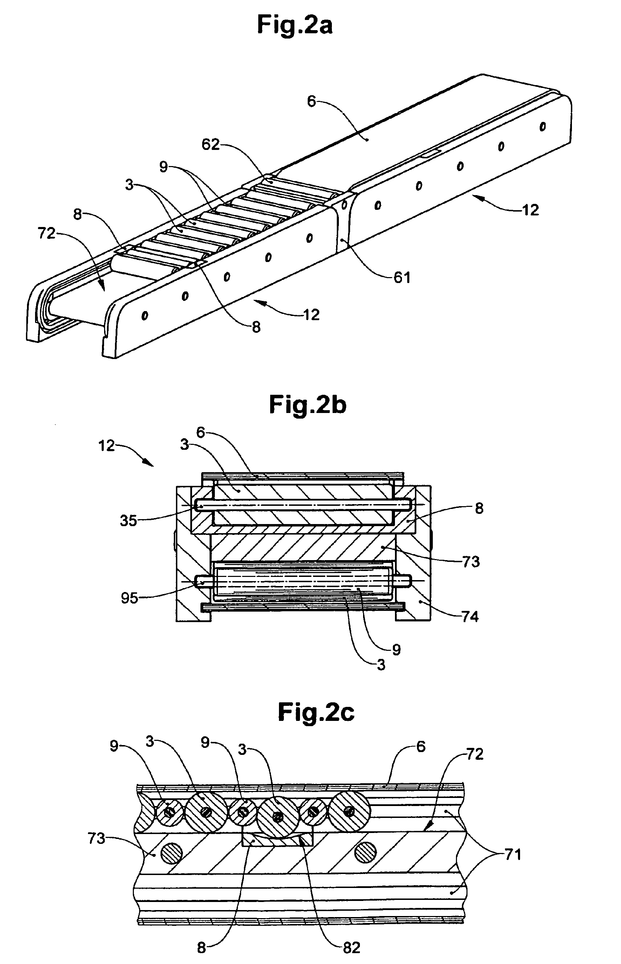

**Figuren 2a-2c** zeigen eine Ansicht einer Stützvorrichtung und zwei Schnitte durch eine weitere Ausführungsform einer Stützvorrichtung mit einer Vertiefung 82 in einer Stützfläche 72 des Zentralkörpers 73. Es sind auch hier nicht alle Rollen 3 entlang der Umlaufbahn um den Zentralkörper 73 gezeichnet. **Figur 2a** zeigt zudem auch eine serielle Aneinanderreihung zweier Stützvorrichtungen 12, mit einem dazwischen angeordneten Zwischenelement 61. Eine solche Aneinanderreihung ist natürlich auch mit der Stützvorrichtung 12 gemäss den **Figuren 1a-1d** möglich.

**Figur 2c** zeigt eine seitliche Ansicht im Bereich der Vertiefung 82 bei entferntem Seitenelement 74, und **Figur 2b** einen Querschnitt im Bereich der Vertiefung 82. Die Vertiefung 82 dient zur Entlastung und zum Ausrichten der Rollen 3, für den Fall dass sie sich verkanten, währenddem sie zwischen Band 6 und Stützfläche 72 abrollen. Das Verkanten erhöht die Abnutzung der Stützvorrichtung 12, beispielsweise indem die Stützrollen 3 seitlich gegen die Führung laufen und die Stirnflächen respektive deren Kanten sich an der Führung reiben. Die Vertiefung 82 ist beispielhaft in einem separaten Entlastungselement 8 ausgebildet, kann aber auch an dem Zentralkörper 73 oder den Seitenelementen 74 ausgeformt sein.

Im Stützbereich 11 stützt die Stützfläche 72 die Rollen 3 und damit auch, direkt oder via das Band 6, das Fördermittel oder Fördergut (nicht gezeichnet). Im Bereich der Vertiefung 82 sind die jeweils dort befindlichen Rollen 3 von der Last befreit. Die Rollen 3 bewegen sich dort, aufgrund der Schwerkraft und/oder mittels einer seitlichen Führung der Rollen 3, etwas von dem Band 6 weg nach unten. Dadurch sind sie leichter beweglich und können sich, falls sie im lasttragenden Bereich mit ihrer Drehachse in eine schräge Position gelangt sind, wieder ausrichten, d.h. so, dass ihre Drehachse senkrecht zur Abrollrichtung der Rollen 3 verläuft.

In der **Figur 2a** ist nur ein Entlastungselement 8 eingezeichnet, es können aber auch mehrere Entlastungselement 8 entlang des Stützbereiches 11 angeordnet sein.

Die Stützvorrichtungen 12 gemäss den **Figuren 1a-1d** und **2a-2c** weisen endlos umlaufende Rollen 3 auf. In analoger Weise kann natürlich auch eine Stützvorrichtung mit hin und her bewegten Rollen, also mit nicht umlaufenden oder nur mit rein linear bewegten Rollen vorliegen und optional mit einer Vertiefung 82 versehen sein. Dabei wirkt sich die Symmetrie der Vertiefung 82 in Bewegungsrichtung (vorwärts oder rückwärts) aus, indem ungeachtet der Bewegungsrichtung die gleiche Wirkung auftritt.

Die Vertiefungen 82 sind in den **Figuren 2a** bis **2c** als gesonderte Elemente oder Entlastungselemente 8 gezeichnet. Sie können in anderen Ausführungsformen der Erfindung aber auch an der Stützfläche 72 und an den Seitenelementen 74 ausgebildet sein, also ohne dass ein separates Bauteil zur Ausbildung der Vertiefung 82 erforderlich ist.

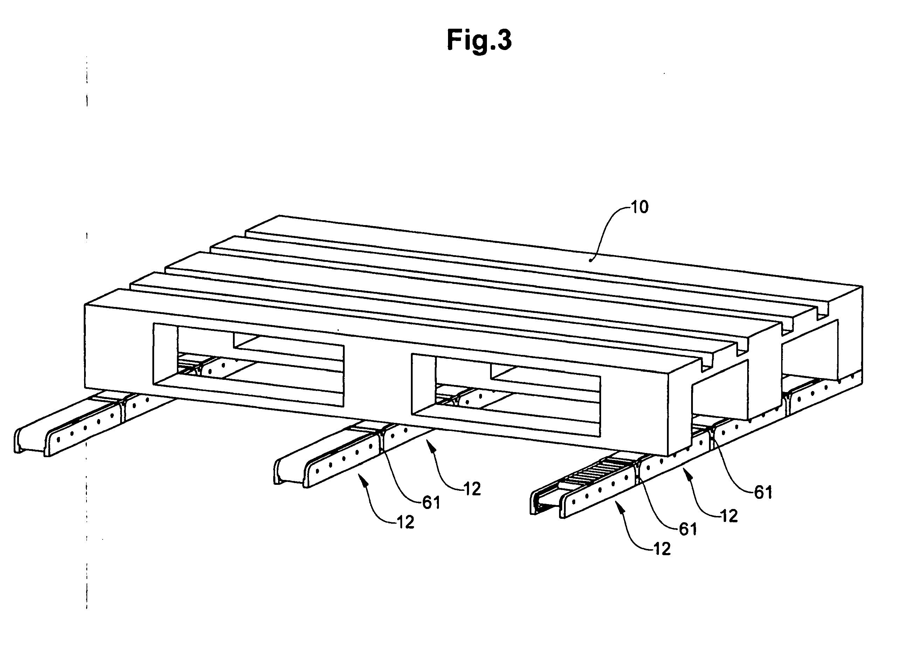

**Figur 3** zeigt eine Anwendung einer Fördereinrichtung aus mehren Stützvorrichtungen 12. Es sind also zum einen mehrere Stützvorrichtungen 12 in Serie angeordnet, jeweils mit einem Zwischenelement 61 zur Lagerung eines Fördergutes 10 zwischen den Stützvorrichtungen 12. Zum anderen sind mehrere solcher Serien von Stützvorrichtungen 12 parallel zueinander angeordnet, um breites Fördergut 10 stützen und fördern zu können.

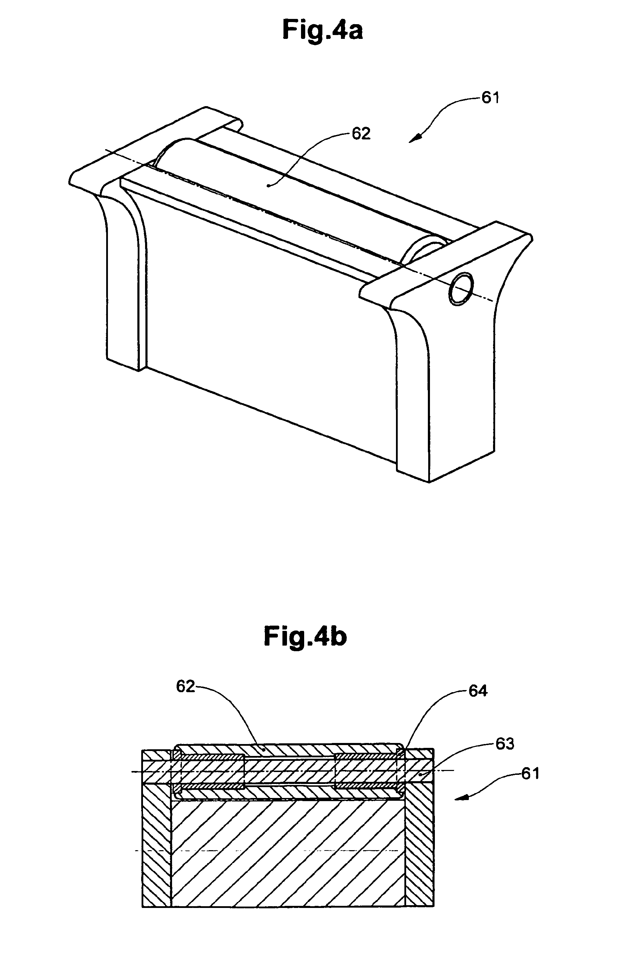

**Figuren 4a-4b** zeigen ein Zwischenelement 61 mit beispielhaft einer einzigen Zwischenrolle 62. Die Zwischenrolle 62 kann mittels eines Lagers 64, wie gezeigt eines Gleitlagers, um eine Achse 63 drehen. In anderen Ausführungsformen der Erfindung ist das Lager ein Wälzlager im feststehenden Teil des Zwischenelementes 61 oder in der Zwischenrolle 62. Die äusserc Form von Seitenteilen des Zwischenelementes 61 (in Förderrichtung gesehen) korrespondiert mit der äusseren Form der Seitenelemente 74 der Stützvorrichtungen 12, so dass sie formschlüssig aneinandergefügt werden können. Zur Verbindung können weitere formschlüssige Elemente (nicht gezeichnet) und/oder Flansche für Schraubverbindungen vorgesehen sein.
**Figur 5** zeigt einen Schnitt durch eine Stützvorrichtung mit Rollenlagern 37. Es ist beispielhaft gezeigt, wie Rollenlager 37 an einer Rollenachse 36 einer Stützrolle 3 angeordnet sind. In gleicher Weise können auch die Distanzierungsrollen 9 in der Führungsnut 71 gelagert sein. Mit dieser Auführungsform werden Reibkräfte und Verschleiss weiter vermindert, welche auftreten, wenn der Rollenkörper 5 in Bewegungsrichtung durch Schubkräfte belastet wird, und dadurch die Rollenachsen 36 in eine Richtung senkrecht zur Ebene der Führungsnuten 71 weggedrängt werden.
**Figur 6** zeigt einen Querschnitt durch eine Stützvorrichtung gemäss einer Ausführungsform der Erfindung. Hier sind jeweils zwei Distanzierungsrollen 9 zwischen zwei Stützrollen 3 angeordnet. Die Distanzierungsrollen 9 rollen an den Stützrollen 3 ab. Die Distanzierungsrollen 9 liegen im Stützbereich 11 mit ihren Achsen jeweils oberhalb und unterhalb einer Ebene (parallel zur Stützfläche 72) durch die Achsen der Stützrollen 3 (mit Ausnahme derjenigen Stützrollen 3, die im Bereich einer Vertiefung 82 abgesenkt sind). Die jeweils zwei Distanzierungsrollen 9 sind in vertikaler Richtung, also normal zur Stützfläche 72, zusammengehalten, so dass Schubkräfte zwischen den Stützrollen 3 übertragbar sind. Indem die Rollen und Rolleneinheiten Schubkräfte übertragen können, ist es möglich, dass ein geförderter Gegenstand, welcher über eine Stützvorrichtung 12 geschoben wird, andere Gegenstände, welche sich ebenfalls auf derselben Stützvorrichtung 12 befinden, indirekt über den Rollenkörper im Lasttrum antreibt und weiter befördert.

Die in **Figur 6** eingezeichneten Entlastungselemente 8 respektive deren Vertiefungen wirken in gleicher Weise wie anhand der **Figuren 2a-2c** erklärt. Die Stützvorrichtung 12 der **Figur 6** kann aber auch ohne Entlastungselemente 8 realisiert werden.

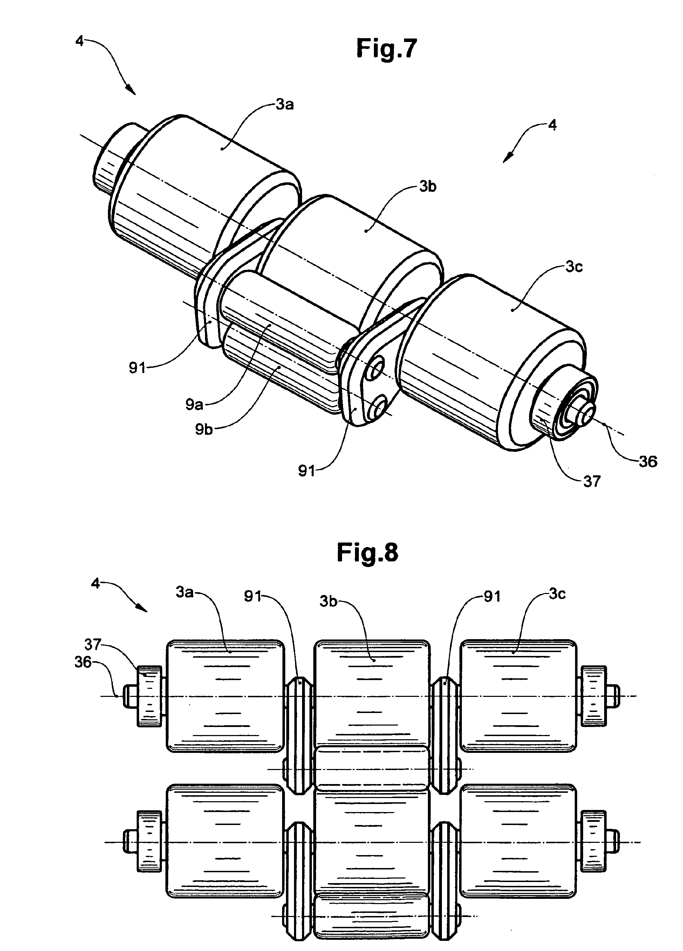

**Figur 7** zeigt eine Rolleneinheit 4 und **Figur 8** zwei hintereinander angeordnete Rolleneinheiten 4 in einer Aufsicht. In den Rolleneinheiten 4 sind jeweils eine Stützrolle 3 und zwei Distanzierungsrollen 9 (hier einzeln als 9a und 9b bezeichnet) miteinander beweglich verbunden, d.h. sie sind alle drei in Lagerelementen 91 gelagert. Die Lagerelemente 91 können grundsätzlich nahe bei den Enden der Rollenachse 36 angeordnet sein, so dass eine einteilige Stützrolle 3 und die beiden Distanzierungsrollen 9 zwischen den Lagerelementen 91 liegen. Im gezeigten Beispiel sind die Lagerelemente 91 aber von den Enden entfernt, so dass die Stützrolle 3 mindestens drei koaxiale Abschnitte 3a, 3b, 3c gleichen Durchmessers aufweist, welche über die Rollenachse 36 miteinander verbunden sind. Jeweils zwischen zwei dieser Abschnitte ist ein Lagerelement 91 drehbar an der Rollenachse 36 angeordnet und ragt in radialer Richtung über Rollenabschnitte hinaus. Zwischen den zwei Lagerelementen sind die zwei Distanzierungsrollen 9 gelagert (es werden mehrere Abschnitte von Rollen - seien es nun Stützrollen oder Distanzierungsrollen - die koaxial zueinander angeordnet sind und sich miteinander bewegen, jeweils als eine Rolle betrachtet).

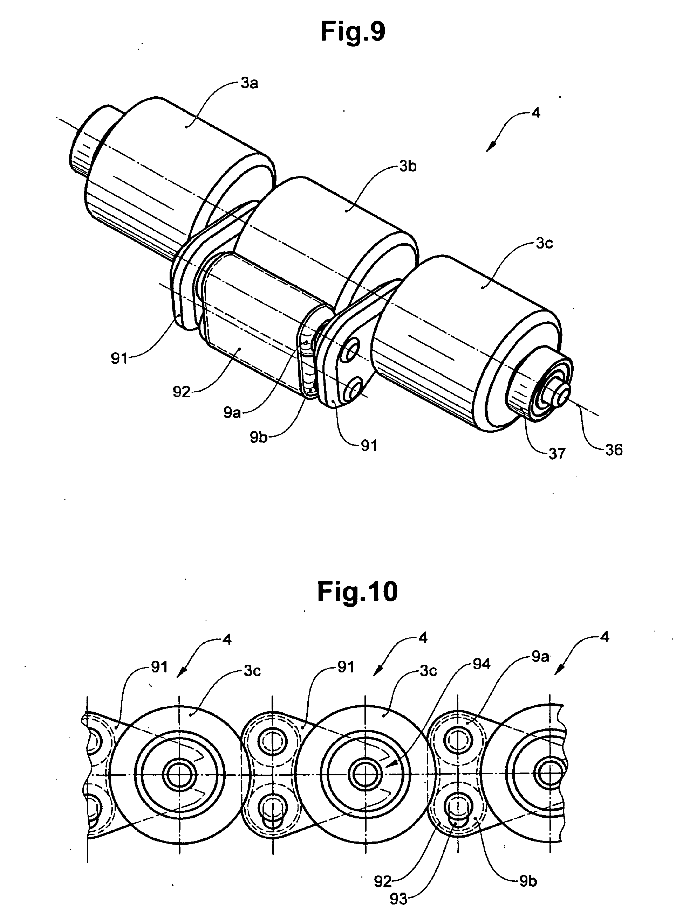

**Figuren 9-12** zeigen Rolleneinheiten mit einem Halteband 92 zur Entlastung der Achsen der Distanzierungsrollen. **Figuren 9** und **10** zeigen Ansichten einer Rolleneinheit 4 ähnlich jener der **Figuren 7** und **8****,** jedoch mit einem um die beiden Distanzierungsrollen 9a, 9b geschlungenen Halteband 92. Eine Lagerstelle mindestens einer der Distanzierungsrollen 9a, 9b, hier beispielhaft die untere, ist als Langloch 93 ausgeführt. Im unbelasteten Zustand rutscht die untere Rolle nach unten. Im belasteten Zustand, wie in der **Figur 10** gezeigt, werden die Distanzierungsrollen 9a, 9b durch die Stützrollen 3 respektive durch die mittleren Abschnitte 3b derselben auseinandergedrückt (nach oben und nach unten), aber dabei durch das Halteband 92 zusammengehalten. Das Halteband 92 läuft zwischen den Stützrollen 3 und den Distanzierungsrollen 9 durch und teilweise entlang der Distanzierungsrollen 9. In **Figur 10** ist eine Schnappverbindung 94 zwischen den Lagerelementen 91 und der Achse 63 der Rollenabschnitte der Stützrolle 3 strichliert gezeigt. Diese erlaubt eine einfache Montage der Rolleneinheit 4.

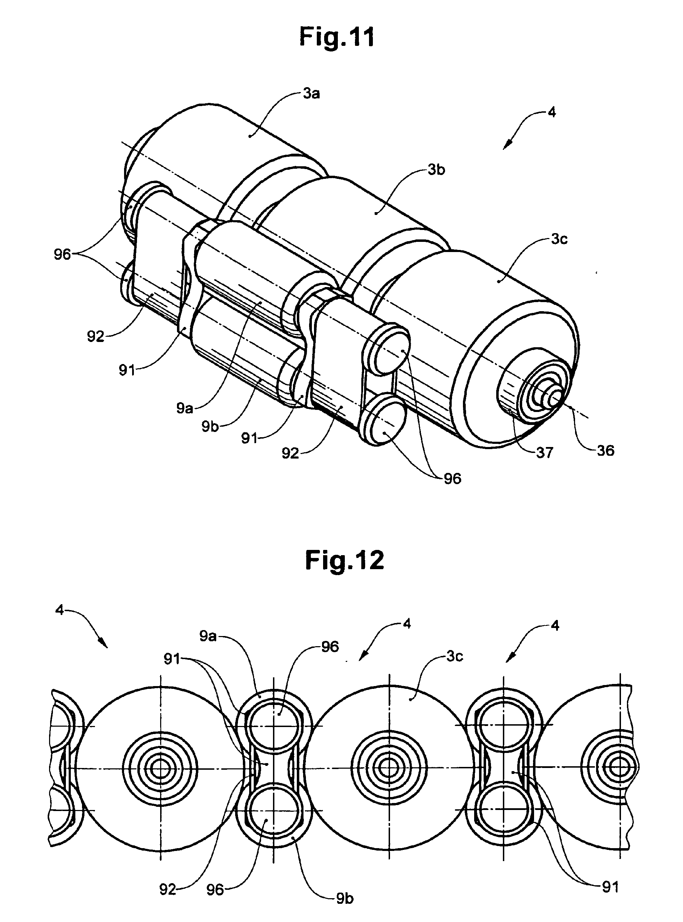

**Figuren 11** und **12** zeigen eine weitere Ausführungsform mit einem Halteband 93, welches nicht um die Distanzierungsrollen 9 selber, sondern um Achsverlängerungen 96 der Distanzierungsrollen 9 verläuft. So entlastet auch hier das Halteband 93 die Achslager der Distanzierungsrollen 9, indem es die Achsen daran hindert, sich über ein vorgegebenes Mass voneinander zu entfernen. Die Distanzierungsrollen 9 sind auch hier in Lagerelementen 91 gelagert und vorzugsweise mit den Stützrollenabschnitten 3a, 3b, 3c verbunden.

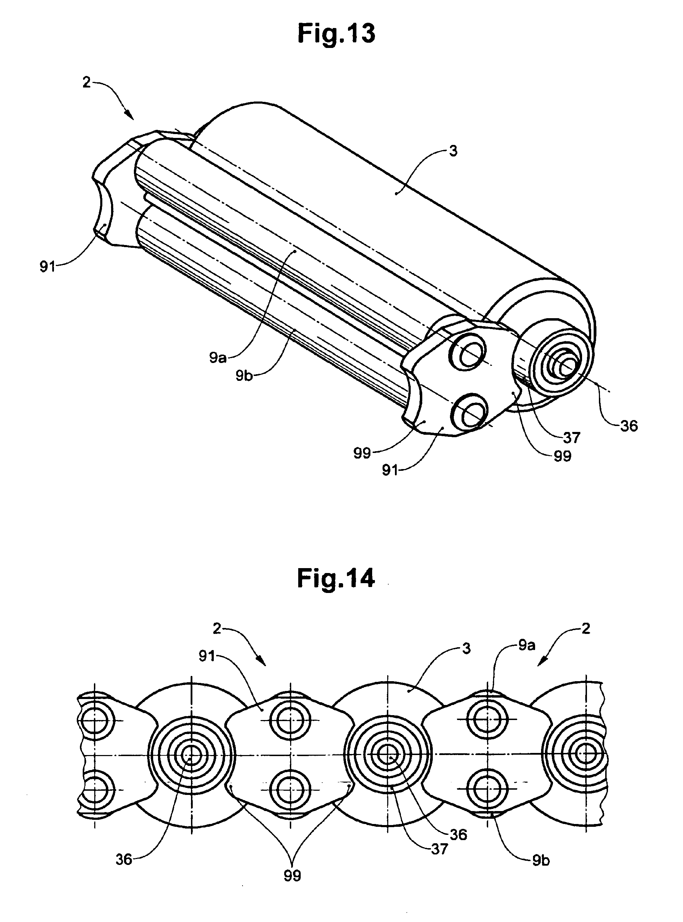

**Figuren 13-16** zeigen Lagerelemente 91 und Distanzierungsrollen 9, welche nicht an Stützrollen 3 befestigt sind. Die Lagerelemente 91 bilden zusammen mit den Distanzierungsrollen 9 ein Distanzierungselement 2. Die Distanzierungselemente 2 sind lose bezüglich der Stützrollen 3 beweglich, und der Rollenkörper 5 lässt sich entlang der Umlaufbahn der Rollen auseinanderziehen. In den **Figuren 13-16** ragt eine Schulter 98, 99 eines Lagerelementes 91 respektive eines Lagers 97 in radialer Richtung in den umhüllenden Zylinder der Stützrolle 3 hinein und begrenzt dadurch eine Bewegung der Stützrolle 3 entlang der Richtung ihrer Rollenachse 36. Im Gegensatz zu einer Variante ohne die Schultern 98, 99 tritt zwischen den Schultern 98, 99 und den Stützrollen 3 nur eine rotierende Bewegung auf. Ohne die Schultern 98, 99 könnten die Stützrollen 3 auch mit einer translatorischen Bewegung an den Seitenelementen 74 reiben.

**Figuren 13** und **14** zeigen Ansichten von Stützrollen 3 und Distanzierungselementen 2, wobei die Lagerelemente 91 der Distanzierungselemente 2 jeweils zwei Schultern 99 aufweisen, welche die Stützrollen 3 in axialer Richtung umfassen. Die Schultern weisen konkave Abschnitte auf, welche auf die Rollenachsen 36 der Stützrollen 3 hin ausgerichtet sind. Auch hier sind Haltebänder um die Distanzierungsrollen 9 oder deren Achsen einsetzbar. Die Distanzierungsrollen 9 stehen in Richtung senkrecht zur Stützfläche 72 ein wenig über den Rand der Lagerelemente 91 vor. Wird der Rollenkörper in Förderrichtung entlastet, so können die Distanzierungselemente 2 nach unten auf die Stützfläche 72 rutschen, und auch in dieser Stellung entlang der Stützfläche 72 rollen und mit einem Teil der Lagerelemente 91 rutschen. Werden unter Belastung in Förderrichtung die Stützrollen 3 wieder gegeneinander gedrückt, so rutschen die Rollenachsen 36 der Stützrollen 3, oder auch Rollenlager 37 (oder Gleitlager, nicht gezeichnet) der Stützrollen 3, in die konkaven Abschnitte der Lagerelemente 91 hinein und heben die Lagerelemente 91 wieder hoch, bis die Distanzierungsrollen 9 symmetrisch zu der Ebene durch die Rollenachsen 36 liegen.

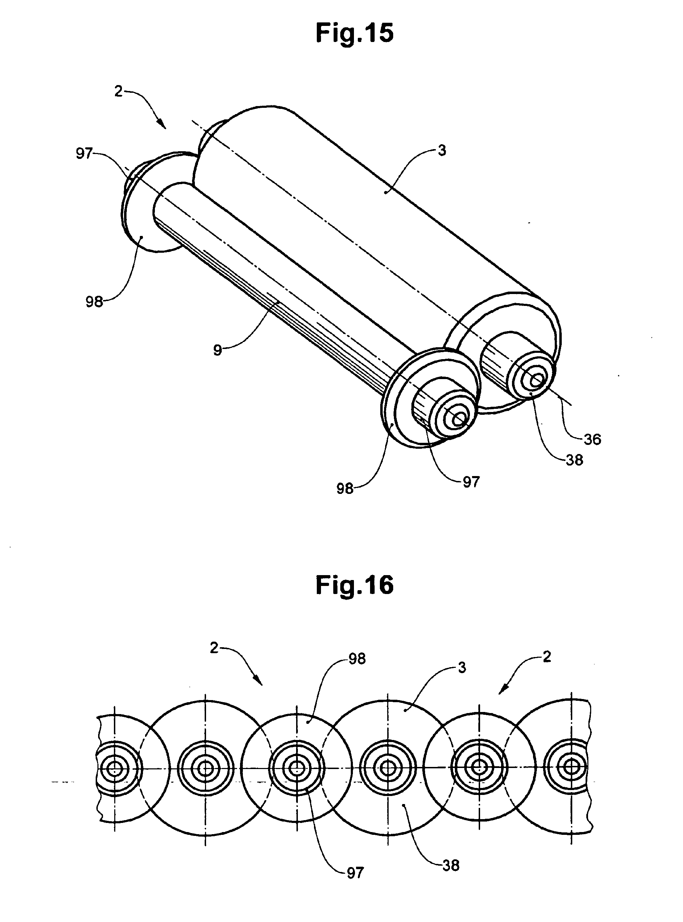

**Figuren 15** und **16** zeigen Ansichten von Stützrollen 3 und Distanzierungselementen 2, wobei die Distanzierungselemente 2 jeweils eine einzelne Distanzierungsrolle 9 mit Lagern, insbesondere Gleitlagern 97 aufweisen. Die Gleitlager 97 weisen jeweils umlaufende Schultern 99 auf, welche die Stützrollen 3 in axialer Richtung umfassen und führen. Im gezeigten Beispiel weisen auch die Stützrollen 3 Gleitlager 38 auf, welche in derselben Führungsnut 71 wie die Gleitlager 97 der Distanzierungsrollen 9 rollen oder gleiten. Es sind auch die anderen Ausführungsformen der Erfindung mit Gleitlagern realisierbar, und es ist diese Ausführungsform der **Figuren 15** und **16** auch mit Rollenlagern realisierbar. In einer weiteren Ausführungsform der Erfindung weisen die Distanzierwigsrollen kein Lager aus, und ist eine Schulter 99 an der Distanzierungsrolle 9 ausgeformt, dreht sich also mit der Distanzierungsrolle 9 mit.

Der Durchmesser der Stützrollen 3 liegt, insbesondere bei einer Ausführung mit Kunststoffrollen in einem Leichtbauförderer für hohe Lasten, beispielsweise zwischen 10 mm und 30 mm, vorzugsweise um 20 mm, und der Durchmesser der Distanzierungsrollen 9 zwischen 5 mm und 15 mm. Die Länge einer einzelnen Stützvorrichtung 12 beträgt beispielsweise 300 mm bis 500 mm oder länger, wobei mehrere Stützvorrichtungen 12 in Serie aneinander gelegt werden können, um beliebige Distanzen zu überbrücken.

### BEZUGSZEICHENLISTE

- 1: Fördereinrichtung
- 11: Stützbereich
- 12: Stützvorrichtung
- 2: Distanzierungselement
- 3: Stützrolle
- 3a, 3b, 3c: Rollenabschnitte
- 35: Achszapfen der Stützrollen
- 36: Rollenachse
- 37: Rollenlager
- 38: Gleitlager
- 4: Rolleneinheit
- 5: Rollenkörper
- 6: Band
- 61: Zwischenelement
- 62: Zwischenrolle
- 63: Achse
- 64: Lager
- 7: Stützkörper
- 71: Führungsnut

- 72: Stützfläche
- 73: Zentralkörper
- 74: Seitenelement
- 8: Entlastungselement
- 81: Absenkung der Führungsnut
- 82: Vertiefung der Stützfläche
- 83: Bahnverengung
- 9, 9a, 9b: Distanzierungsrolle
- 91: Lagerelement
- 92: Halteband
- 93: Langloch
- 94: Schnappverbindung
- 95: Achszapfen der Distanzierungsrollen
- 96: Achsverlängerung
- 97: Gleitlager
- 98,99: Schulter
- 10: Fördergut

## Patentansprüche

1. Stützvorrichtung (12) zum Fördern schwerer Lasten, aufweisend einen Stützkürper (7) und einen um den Stützkörper (7) umlaufenden Rollenkörper (5), wobei
der Rollenkörper (5) eine Folge von Stützrollen (3) und von Distanzierungsrollen (9) aufweist,
die Distanzierungsrollen (9) einen kleineren Durchmesser als die Stützrollen (3) aufweisen und die Distanzierungsrollen (9) jeweils aufeinanderfolgende Stützrollen (3) voneinander beabstanden, und
die Stützvorrichtung (12) zum Stützen einer entlang eines Stützbereiches (11) beweglichen Last vorgesehen ist, wobei zwischen zwei aufeinanderfolgenden Stützrollen (3) jeweils zwei Distanzierungsrollen (9) angeordnet sind **dadurch gekennzeichnet, dass** zwei aufeinander folgende Stützrollen (3) jeweils durch die zwei Distanzierungsrollen (9) voneinander beabstandet sind.

2. Stützvorrichtung (12) gemäss Anspruch 1, wobei eine Referenzfläche dadurch
definiert ist, dass sich die Achsen der Stützrollen (3) in ihr bewegen, und wobei das Paar von Distanzierungsrollen (9) sich automatisch bezüglich der Referenz
fläche zentriert, wenn die Distanzierungsrollen (9) mit der nächsten Stützrolle (3) in Kontakt kommen.

3. Stützvorrichtung (12) gemäss Anspruch 1 oder 2, wobei der Rollenkörper (5) zumindest im Stützbereich (11) in seiner ganzen Breite von einem Band (6) bedeckt ist, und somit im Stützbereich (11) die Stützrollen (3) am Stützkörper (7) und am Band (6) abrollen.

4. Stützvorrichtung (12) gemäss Anspruch 1, 2 oder 3, wobei die Achsen der Stützrollen (3) eine Referenzfläche, in welcher sie sich bewegen, definieren, und die Achsen einer äusseren Gruppe von Distanzierungsrollen (9), ausserhalb der Referenzfläche verlaufen, und die Achsen einer inneren Gruppe von Distanzierungsrollen (9) innerhalb der Referenzfläche verlaufen.

5. Stützvorrichtung (12) gemäss Anspruch 1, 2, 3 oder 4, wobei jeweils die zwei Distanzierungsrollen (9) an mindestens einem mitbewegten Lagerelement (91) drehbar gelagert sind.

6. Stützvorrichtung (12) gemäss Anspruch 5, wobei jeweils an dem mindestens einem mitbewegten Lagerelement (91) nebst den jeweils zwei Distanzierungsrollen (9) auch eine Stützrolle (3) beweglich befestigt ist, und diese Rollen gemeinsam eine Rolleneinheit (4) bilden.

7. Stützvorrichtung (12) gemäss einem der Ansprüche 1 bis 6, in welcher jeweils ein Halteband (92) die zwei einander zugeordnete Distanzierungsrollen (9) oder die X Achsen dieser Distanzierungsrollen (9) umschlingt.

8. Stützvorrichtung (12) gemäss Anspruch 6 oder gemäss Anspruch 7 in Abhängigkeit von Anspruch 6, wobei, falls die Stützrolle (3) und eine untere Distanzierungsrolle (9) einer Rolleneinheit (4) beide auf der Stützfläche (72) aufliegen, die Rotationsachse einer oberen Distanzierungsrolle (9) oberhalb einer Ebene liegt, welche durch die Rotationsachse der Stützrolle (3) und parallel zur Stützfläche (72) verläuft.

9. Stützvorrichtung (12) gemäss einem der Ansprüche 5 bis 8, wobei beim Auseinanderziehen zweier Stützrollen (3) oder Rolleneinheiten (4) die Distanzierungsrollen (9) gegen die Stützfläche (72) rutschen oder kippen und beim Zusammenstossen der Rolleneinheiten (4) die Distanzierungsrolle (9) wieder hochgehoben oder aufgerichtet werden.

10. Stützvorrichtung (12) gemäss einem der Ansprüche 6 bis 9 wobei in einer Rolleneinheit (4) die Stützrolle (3) mindestens drei koaxiale Abschnitte (3a, 3b, 3c) aufweist, welche über die Rollenachse (36) miteinander verbunden sind, jeweils zwischen zwei dieser Abschnitte ein Lagerelement (91) drehbar an der Rollenachse (36) angeordnet ist, und zwischen den zwei Lagerelementen (91) die zwei Distanzierungsrollen (9) gelagert sind.

11. Stützvorrichtung (12) gemäss einem der vorangehenden Ansprüche, wobei der Stützkörper (7) zwei umlaufende Führungsnuten (71) aufweist und die Stützrollen (3) mittels Achszapfen (35) in den Führungsnuten (71) geführt sind, und vorzugsweise auch die Distanzierungsrollen (9) mittels Achszapfen (95) in den Führungsnuten (71) oder in weiteren Führungsnuten geführt sind.

12. Stützvorrichtung (12) gemäss Anspruch 11, wobei die Stützrollen (3) und/oder die Distanzierungsrollen (9) mittels Rollenlagern (37) oder mittels Gleitlagern (38, 97) in den Führungsnuten gelagert sind.

13. Stützvörrichtung (12) gemäss einem der vorangehenden Ansprüche, wobei eine Schulter (98, 99) eines Lagerelementes (91) respektive eines Lagers (97) in radialer Richtung in den umhüllenden Zylinder der Stützrolle (3) hinein ragt und dadurch eine Bewegung der Stützrolle (3) entlang der Richtung ihrer Rollenachse (36) begrenzt.

14. **Fördereinrichtung** (1) mit zwei oder mehr Stützvorrichtungen (12) gemäss einem der Ansprüche 1 bis 13, wobei die Stützvorrichtungen (12) in Serie hintereinander angeordnet sind, und zwischen den Stützvorrichtungen (12) ein Zwischenelement (61) mit mindestens einem beweglichen Stützelement angeordnet ist, insbesondere mit einer Zwischenrolle (62).

15. Fördereinrichtung (1) gemäss Anspruch 14, wobei Stützvorrichtungen (12) und Zwischenelemente (61) ein modulares Baukastensystem bilden, mit welchem Stützvorrichtungen (12) und Zwischenelemente (61) in beliebiger Anzahl zum Bilden der Fördereinrichtung (1) aneinander reihbar sind.

16. Fördereinrichtung (1) gemäss Anspruch 14 oder 15, wobei die Stützvorrichtungen (12) und die Zwischenelemente (61) formschlüssig aneinander reihbar sind.

17. Fördereinrichtung (1) gcmäss einem der Ansprüche 14 bis 16, wobei die Zwischenelemente (61) in den Stützvorrichtungen (12) integriert sind, und die Stützvorrichtungen (12) mit den integrierten Zwischenelementen (61) aneinander reihbar sind, vorzugsweise formschlüssig.

18. Fördereinrichtung (1) gemäss einem der Ansprüche 14 bis 17, wobei in der Fördereinrichtung (1) mehrere Reihen mit jeweils mehreren Stützvorrichtungcn (12) und Zwischenelementen (61) parallel zueinander angeordnet sind.

19. Fördereinrichtung (1) gemäss einem der Ansprüche 14 bis 18, wobei die Fördereinrichtung (1) zumindest abschnittsweise geneigt ist.

## Claims

1. A support device (12) for conveying heavy loads, comprising a support body (7) and a roller body (5) which revolves around the support body (7),
wherein
the roller body (5) comprises a series of support rollers (3) and distancing rollers (9),
the distancing rollers (9) have a smaller diameter than the support rollers (3), and the distancing rollers (9) in each case distance consecutive support rollers (3) from one another, and
the support device (12) is provided for supporting a load which moves along a support region (11), wherein in each case two distancing rollers (9) are arranged between two consecutive support rollers (3)
**characterised in that** in each case two consecutive support rollers (3) are distanced by the two distancing rollers (9).

2. A support device (12) according to claim 1, wherein a reference surface is defined by pivots of the support rollers (3) moving in it, and wherein the pair of distancing rollers (9) automatically centres itself with regard to the reference surface when the distancing rollers (9) come into contact with the next support roller (3).

3. A support device (12) according to claim 1 or 2, wherein the roller body (5), at least in the support region (11), is covered over its whole width by a belt (6), and thus the support rollers (3) roll on the support body (7) and on the belt (6), in the support region (11).

4. A support device (12) according to claim 1, 2 or 3, wherein the pivots of the support rollers (3) define a reference surface, in which they move, and the pivots of an outer group of distancing rollers (9) run outside the reference surface, and the pivots of an inner group of distancing rollers (9) run within the reference surface.

5. A support device (12) according to claim 1, 2, 3 or 4, wherein in each case the two distancing rollers (9) are rotatably mounted on at least one co-moved bearing element (91).

6. A support device (12) according to claim 5, wherein apart from the in each case two distancing rollers (9), a support roller (3) is also movably fastened in each case on the at least one co-moved bearing element (91), and these rollers together form a roller unit (4).

7. A support device (12) according to one of the claims I to 6, in which in each case a holding belt (92) wraps around the two distancing rollers (9) which are assigned to one another, or around the pivots of these distancing rollers (9).

8. A support device (12) according to claim 6 or claim 7 in dependence on claim 6, wherein, in the case that the support roller (3) and a lower distancing roller (9) of a roller unit (4) both lie on the support surface (72), the rotation axis of an upper distancing roller (9) lies above a plane which runs through the rotation axis of the support roller (3) and parallel to the support surface (72).

9. A support device (12) according to one of the claims 5 to 8, wherein the distancing rollers (8) slip or tilt against the support surface (72) when two support rollers (3) or roller units (4) arc pulled apart, and the distancing rollers (9) are lifted up or set up again when the roller units (4) collide.

10. A support device (12) according to one of the claims 6 to 9, wherein in a roller unit (4), the support roller (3) comprises at least three coaxial sections (3a, 3b, 3c), which are connected to one another via the roller pivot (36), a bearing clement (91) is rotatably arranged on the roller pivot (36), in each case between two of these sections, and the two distancing rollers (9) arc mounted between the two bearing elements (91).

11. A support device (12) according to one of the preceding claims, wherein the support body (7) comprises two peripheral guide grooves (71), and the support rollers (3) are guided in the guide grooves (71) by way of pivot stubs (35), and preferably also the distancing rollers (9) are guided in the guide grooves (71) or in further guide grooves by way of pivot stubs (95).

12. A support device (12) according to claim 11, wherein the support rollers (3) and/or the distancing rollers (9) are mounted in the guide grooves by way of roller bearings (37) or by way of sliding bearings (38, 97).

13. A support device (12) according to one of the preceding claims, wherein a shoulder (98, 99) of a bearing element (91) or of a bearing (97) projects in the radial direction into the enveloping cylinder of the support roller (3) and by way of this limits a movement of the support roller (3) along the direction of its roller axis (36).

14. A **conveying device** (1) with two or more support devices (12) according to one of the claims 1 to 13, wherein the support devices (12) are arranged in series behind one another, and an intermediate element (61) with at least one movable support element, in particular with an intermediate roller (62), is arranged between the support devices (12).

15. A conveyor device (1) according to claim 14, wherein support devices (12) and intermediate elements (61) form a modular construction system, with which support devices (12) and intermediate elements (61) can be strung together in an infinite number, for forming the conveyor device (1).

16. A conveyor device (1) according claim 14 or 15, wherein the support devices (12) and the intermediate element (61) can be strung together with a positive fit.

17. A conveyor device (1) according to one of the claims 14 to 16, wherein the intermediate elements (61) are integrated into the support devices (12), and the support devices (12) with the integrated intermediate elements (61) can be strung together, preferably with a positive fit.

18. A conveyor device (1) according to one of the claims 14 to 17, wherein several rows, in each case with several support devices (12) and intermediate elements (61), are arranged parallel to one another, in the conveyor device (1).

19. A conveyor device (1) according to one of the claims 14 to 18, wherein the conveyor device (1) is inclined at least in sections.

## Revendications

1. Dispositif de soutien (12) destiné à transporter des charges lourdes et présentant un corps de soutien (7) et un corps de roulement (5) qui entoure le corps de soutien (7),
le corps de roulement (5) présentant une succession de rouleaux de soutien (3) et de rouleaux d'écartement (9),
les rouleaux d'écartement (9) présentant un diamètre plus petit que celui des rouleaux de soutien (3) et les rouleaux d'écartement (9) étant maintenus à distance des rouleaux de soutien (3) successifs et
le dispositif de soutien (12) étant prévu pour assurer le soutien d'une charge qui peut être déplacée le long d'une zone de soutien (11), deux rouleaux d'écartement (9) étant disposés chaque fois entre deux rouleaux de soutien (3) successifs,
**caractérisé en ce que**
deux rouleaux de soutien (3) successifs sont chaque fois maintenus à distance par les deux rouleaux d'écartement (9).

2. Dispositif de soutien (12) selon la revendication 1, dans lequel une surface de référence est définie par le fait que les axes des rouleaux de soutien (3) se déplacent sur cette surface, la paire de rouleaux d'écartement (9) se centrant automatiquement par rapport à la surface de référence lorsque le rouleau d'écartement (9) entre en contact avec le rouleau de soutien (3) suivant.

3. Dispositif de soutien (12) selon les revendications 1 ou 2, dans lequel le corps de roulement (5) est recouvert sur toute sa largeur par une bande (6) au moins dans la zone de soutien (11), les rouleaux de soutien (3) roulant sur le corps de soutien (7) et sur la bande (6) dans la zone de soutien (11).

4. Dispositif de soutien (12) selon les revendications 1, 2 ou 3, dans lequel les axes des rouleaux de soutien (3) définissent une surface de référence sur laquelle ils se déplacent et en ce que les axes d'un groupe extérieur de rouleaux d'écartement (9) s'étendent à l'extérieur de la surface de référence et les axes d'un groupe intérieur de rouleaux d'écartement (9) se déplacent sur la surface de référence.

5. Dispositif de soutien (12) selon les revendications 1, 2, 3 ou 4, dans lequel les deux rouleaux d'écartement (9) sont chaque fois montés à rotation sur au moins un élément de montage (91) déplacé avec eux.

6. Dispositif de soutien (12) selon la revendication 5, dans lequel un rouleau de soutien (3) est également fixé à déplacement sur au moins un élément de montage (91) déplacé conjointement, en plus des deux rouleaux d'écartement (9), ces rouleaux formant ensemble une unité de roulement (4).

7. Dispositif de soutien (12) selon l'une des revendications 1 à 6, dans lequel une bande de maintien (92) entoure les deux rouleaux d'écartement (9) associés l'un à l'autre ou les axes de ces rouleaux d'écartement (9).

8. Dispositif de soutien (12) selon la revendication 6 ou selon la revendication 7 dans la mesure où elle dépend de la revendication 6, et dans lequel au cas où le rouleau de soutien (3) et un rouleau inférieur d'écartement (9) d'une unité de roulement (4) reposent tous deux sur la surface de soutien (72), l'axe de rotation d'un rouleau supérieure d'écartement (9) est situé au-dessus d'un plan qui passe par l'axe de rotation du rouleau de soutien (3) et qui s'étend parallèlement à la surface de soutien (72).

9. Dispositif de soutien (12) selon l'une des revendications 5 à 8, dans lequel lors de l'écartement de deux rouleaux de soutien (3) ou unités de roulement (4), les rouleaux d'écartement (9) glissent ou basculent sur la surface de soutien (72) et en ce que lors du rapprochement des unités de roulement (4), les rouleaux d'écartement (9) sont relevés ou réalignés.

10. Dispositif de soutien (12) selon l'une des revendications 6 à 9, dans lequel dans une unité de roulement (4), le rouleau de soutien (3) présente au moins deux parties coaxiales (3a, 3b, 3c) reliées l'une à l'autre par l'intermédiaire de l'axe de roulement (36), un élément de montage (91) étant disposé à rotation sur l'axe de roulement (36) entre ces deux parties et les deux rouleaux d'écartement (9) étant montés entre les deux éléments de montage (91).

11. Dispositif de soutien (12) selon l'une des revendications précédentes, dans lequel le corps de soutien (7) présente deux rainures périphériques de guidage (71) et les rouleaux de soutien (3) sont guidés dans les rainures de guidage (71) par des tourillons d'axe (35), les rouleaux d'écartement (9) étant de préférence également guidés dans les rainures de guidage (71) ou dans d'autres rainures de guidage au moyen de tourillons d'axe (95).

12. Dispositif de soutien (12) selon la revendication 11, dans lequel les rouleaux de soutien (3) et/ou les rouleaux d'écartement (9) sont montés dans les rainures de guidage au moyen de paliers de roulement (37) ou au moyen de paliers coulissants (38, 97).

13. Dispositif de soutien (12) selon l'une des revendications précédentes, dans lequel un épaulement (98, 99) d'un élément de montage (91) ou d'un palier (97) s'enfonce dans la direction radiale dans le cylindre d'enveloppe du rouleau de soutien (3) et limite ainsi le déplacement du rouleau de soutien (3) dans la direction de son axe de roulement (36).

14. **Dispositif de transport** (1) doté de deux ou plusieurs ensembles de soutien (12) selon l'une des revendications 1 à 13, les ensembles de soutien (12) étant disposés en série les uns derrière les autres et un élément intermédiaire (61) qui présente au moins un élément mobile de soutien et en particulier un rouleau intermédiaire (62) étant disposé entre les ensembles de soutien (12).

15. Dispositif de transport (1) selon la revendication 14, dans lequel des ensembles de soutien (12) et des éléments intermédiaires (61) forment un système de montage modulaire par lequel des ensembles de soutien (12) et des élément intermédiaires (61) peuvent être rangés en série les uns contre les autres en nombre quelconque pour former le dispositif de transport (1).

16. Dispositif de transport (1) selon les revendications 14 ou 15, dans lequel les ensembles de soutien (12) et les éléments intermédiaires (61) peuvent être rangés les uns à la suite des autres en correspondance géométrique.

17. Dispositif de transport (1) selon l'une des revendications 14 à 16, dans lequel les éléments intermédiaires (61) sont intégrés dans les ensembles de soutien (12) et les ensembles de soutien (12) peuvent être rangés les uns à la suite des autres avec les éléments intermédiaires (61) intégrés, de préférence en correspondance géométrique.

18. Dispositif de transport (1) selon l'une des revendications 14 à 17, dans lequel plusieurs rangées qui présentent chacune plusieurs ensembles de soutien (12) et éléments intermédiaires (61) sont disposés parallèlement les unes aux autres dans le dispositif de transport (1).

19. Dispositif de transport (1) selon l'une des revendications 14 à 18, dans lequel le dispositif de transport (1) est incliné au moins dans certaines de ses parties.
